# EUROPEAN PATENT SPECIFICATION

(11) **EP 3 092 903 B1**
(45) Date of publication and mention of the grant of the patent: **09.09.2020**
(21) Application number: 14878368.1
(22) Date of filing: 30.12.2014
(51) Int. Cl.: A23B 7/16, A23B 7/157, A23L 3/3544, A23L 3/3508, A23B 7/154

(54) **EDIBLE COATING FOR PRESERVING PIECES OF FRUIT, PRODUCTION METHOD AND APPLICATION THEREOF**
ESSBARES ÜBERZUGSMITTEL ZUR KONSERVIERUNG VON FRÜCHTEN, HERSTELLUNGSVERFAHREN UND ANWENDUNG DAVON
ENROBAGE COMESTIBLE POUR LA CONSERVATION DE MORCEAUX DE FRUITS, AINSI QUE SON PROCÉDÉ DE FABRICATION ET D'APPLICATION

(30) Priority: 07.01.2014 ES 201430011
(43) Date of publication of application: 16.11.2016
(73) Proprietor: Production and Innovation on Edible Coatings S.L., 31110 Noain (Navarra) (ES)
(72) Inventor: ROJAS GRAÜ, María Alejandra, E-31110 Noain (Navarra) (ES); URRUTIA LARRAZ, Raquel, E-31110 Noain (Navarra) (ES); ROYO LIZARBE, Maite, E-31110 Noain (Navarra) (ES); OSÉS FERNÁNDEZ, Javier, E-31110 Noain (Navarra) (ES)
(74) Representative: Agasse, Stéphane
(86) International application number: PCT/ES2014/070996
(87) International publication number: WO 2015/104440

(56) References cited:
- EP-A1- 1 550 378
- WO-A1-96/01566
- WO-A1-97/23138
- WO-A1-2013/049928
- WO-A1-2013/079903
- WO-A2-98/42214
- CA-A1- 2 834 921
- CN-B- 101 884 348
- ES-A1- 2 204 330
- KR-A- 20100 137 074
- US-A- 2 894 843
- US-A- 5 198 254
- Elisabeth Garcia ET AL: "Preservative Treatments for Fresh-Cut Fruits and Vegetables", , 1 January 2002 (2002-01-01), pages 1-32, XP055088879, Retrieved from the Internet: URL:http://ucanr.org/sites/Zann_test/files /28711.pdf [retrieved on 2013-11-18]
- Anonymous: "Carboxymethylcellulose", , 6 March 2013 (2013-03-06), pages 1-2, XP055394221, Retrieved from the Internet: URL:https://web.archive.org/web/2013030600 3917/http://www.dow.com/dowwolff/en/indust rial_solutions/polymers/carboxymethylcellu lose/ [retrieved on 2017-07-27]

## Description

### Field of the Invention

The present invention relates to the preservation of freshly-cut fresh fruit by providing an edible coating, applicable on an industrial scale, having a carboxymethyl cellulose polysaccharide base to create a selective barrier to the exchange of gases and the loss of moisture allowing the texture and flavor of the freshly cut fruit to be preserved. The coating is especially appropriate for application on fruit liable to surface dehydration, such as, for example, apples, pears, peaches, kiwis, nectarines or mangoes, although it can be applied over any type of fruit which in the industrial preparation processing thereof requires the fruit to be cut, peeled, chopped into pieces and finally packaged.

### Background Art

Fresh fruit deteriorates quickly and particularly when the pulp of the fruit is exposed to the environment, such as happens when the fruit is peeled and cut into pieces, with the occurrence of browning, softening, appearance of disagreeable flavors and growth of microorganisms which reduce the shelf life of the freshly cut fruit.
To decelerate said deterioration reactions in the industrial processing of the fruit, the washing, peeling, cutting into pieces and packaging operations are carried out in a chain of cold with temperatures of under 8°C, whereby the breathing rate of the cut tissues is lowered, with the enzymes related with the changes of color and with texture degradation processes being held latent, further to minimizing the growth of microorganisms which cause alterations.
Habitually, recourse has been had to the use of preservatives which, in combination with the use of low temperatures, helps to preserve the fruit. CN101884348 discloses a coating comprising calcium lactate, carboxymethyl cellulose, natamycin, vanillin and peppermint oil. There is known the use of preservatives for fruits, based on calcium and polysaccharides, as in US2894843 involving calcium sulfite, carboxymethyl cellulose and agar, or based on calcium and antioxidant solutions which comprise ascorbate and calcium among the components thereof, such as is the case of US3754938A, U54011348, U54818549, WO1997023138, EP746207A1, DE3624035, ES2011757 and GB2100575.
For example, WO1994012041 discloses a preservative for maintaining the peeled and chopped fresh fruit comprising calcium ions, ascorbate ions and water, with ascorbic acid and calcium chloride percentages of 0.25% to 2% being contemplated in both cases. The preservative has metal ion complexants (identified as chelating agents), in a proportion of 0.5% or more by dry weight, i.e., excluding the water.

On the other hand, ES2307473 discloses a process for the preservation of peeled and chopped fresh fruit, in which the preservative used, like in the case of WO1994012041, consists of a solution comprising calcium ions, ascorbate ions and water, with the ascorbate ions and calcium ions being present in an ionic ratio the same as that of the aforementioned WO1994012041, but, unlike the latter, the amount of metal ion chelating agents in the preservative is less than 0.5% by weight of the components, excluding the water. In this document, the calcium ions are obtained from calcium hydroxide, calcium salt or a mixture of both, while the ascorbate ions are obtained from ascorbic acid, ascorbate or erythorbate. There is also described the possibility of using calcium ascorbate or calcium erythorbate as source of the calcium ions and the ascorbate ions.

It is well known that these calcium-salt-based antioxidant preservatives allow the enzymatic browning to be avoided, prolonging the preservation time of the fruit. Nevertheless, these compounds do not prevent other problems proper to cut fruit, such as the surface dehydration undergone by the tissue once cut.

For this reason, in recent years there has proliferated the use of edible coatings, especially of a polysaccharide base, which form a transparent film on the surface of the fruit, allowing, on the one hand, the surface dehydration of the product to be prevented and on the other hand, to serve as a vehicle for active ingredients such as antioxidants and antimicrobial agents, thus allowing the shelf life of the cut fruits to be prolonged.

These polysaccharide-based edible coatings may be formed by any polymer capable of gelling and forming a coating, the most used within this group being maltodextrin, cellulose derivatives such as methyl cellulose and carboxymethyl cellulose, starches, carrageenans, pectin, alginate or gellan. These polymers are marketed in powdered form and are usually diluted in water to obtain an aqueous solution with which to coat the fruit.

Among these polysaccharides, carboxymethyl cellulose has been widely used in the post-harvesting preservation of whole fruits and vegetables, mixed on many occasions with fatty acids to improve their barrier to gas and water exchange. For example, US5198254 discloses an edible coating for whole fruit, vegetables or fungi, which uses carboxymethyl cellulose in its composition. The coating obtained with this solution is not appropriate for the preservation of cut fresh fruit, since it forms on the cut tissue a film having a low capacity of adherence and at a thickness modifying the sensory characteristics of the freshly cut fresh fruit, by altering the texture and flavor thereof.
There is, therefore, a need for an edible coating for freshly cut pieces of fresh fruit, with a carboxymethyl cellulose polysaccharide base, which is practically imperceptible to the user and which allows the texture and flavor of the pieces of fruit to be maintained, as though they were freshly cut, during the longest possible time.

### Object of the Invention

The object of the present invention is an edible coating for application over pieces of fresh fruit which have been minimally processed by operations of washing, peeling and chopping into pieces, in the industrial processing thereof. The invention also relates to the process of preparing the edible coating and the application thereof over the pieces of fruit. The invention is defined by the appended set of claims.

The edible coating for the preservation of the pieces of fruit is formed by a polysaccharide-based aqueous solution which is applied to coat the fruit after this has been washed, peeled and chopped into pieces in the industrial processing thereof, there being created by the application of said aqueous solution a protective barrier which preserves the pieces of fruit and prevents the browning and surface dehydration thereof.

The aqueous solution comprises carboxymethyl cellulose as polysaccharide base, a source of calcium, namely calcium ascorbate, citric acid and additionally an antimicrobial agent, in the amounts as defined in claim 1. The carboxymethyl cellulose has a high viscosity and is present in the aqueous solution in a very low concentration. To be precise, the carboxymethyl cellulose has a high viscosity of over 1500 mPa.s as measured for a 1% w/w aqueous CMC solution, using a Nahita 801 N/SC88808 viscometer, with a n° 2 spindle at 12 rpm a 21 °C, and is at a low concentration of between 0.025% and 1% by weight relative to the total weight of the components of the aqueous solution. Preferably, the carboxymethyl cellulose is at a concentration of between 0.1% and 0.75% by weight relative to the total weight of the components of the aqueous solution.

The aqueous solution, like in the background art cited, is a solution in water of powdered solid components comprising calcium ions. The calcium is obtained from calcium ascorbate. The calcium ascorbate is at a concentration of between 3% and 15% by weight relative to the total weight of the components of the aqueous solution and, preferably, at a concentration of between 4% and 12% by weight relative to the total weight of the components of the aqueous solution.

The aqueous solution includes as antioxidant agent citric acid or a combination of citric acid and sodium ascorbate. The antimicrobial agent which the aqueous solution may additionally contain malic acid.

The concentration of citric acid alone or in combination with the malic acid is above 0.5% by weight relative to the total weight of the components of the aqueous solution, excluding the water.

The citric acid and, as the case may be, the malic acid, behave as metal ion chelating agents. It is known that the chelating agents coordinate and sequestrate said ions, preventing them from being left free for other processes, and may act indirectly as antimicrobial agents.

The citric acid is at a concentration of between 0.5% and 30% relative to the total weight of the components of the aqueous solution, excluding the water. Preferably at a concentration of between 1% and 20% by weight relative to the total weight of the components of the aqueous solution, excluding the water.

The sodium ascorbate is at a concentration of between 10% and 50% by weight relative to the total weight of the components of the aqueous solution, excluding the water. Preferably, at a concentration of between 20% and 40% by weight relative to the total weight of the components of the aqueous solution, excluding the water.

Where malic acid is used as antimicrobial agent, it is at a concentration of between 0.5% and 20% by weight relative to the total weight of the components of the aqueous solution, excluding the water. Preferably, at a concentration of between 4% and 15% by weight relative to the total weight of the components of the aqueous solution, excluding the water.

Also an object of the invention is the manufacturing process of the edible coating for pieces of fruit, which consists of the following steps of:
- mixing in powder form all the components formed by the polysaccharide, the calcium, the antioxidant agent and, as the case may be, the antimicrobial agent.
- diluting the powder mixture in cold water at a temperature of between 4°C and 8°C, with constant stirring, until it is completely dissolved.

The process of applying the edible coating to the pieces of fruit comprises the following steps of:
- washing, peeling and cutting the fruit into pieces, all in the environment of a temperature of 4°C.
- applying to the pieces of fruit, at between 4°C and 8°C, the cold aqueous solution containing the polysaccharide, the calcium, the antioxidant agent and, as the case may be, the antimicrobial agent, with the contact time between the aqueous solution and the pieces of fruit being between 40 seconds and 120 seconds.
- removing the excess coating of the aqueous solution.
- packaging the coated fruit.

The aqueous solution may be applied by immersion of the pieces of fruit in the aqueous solution, by spraying the aqueous solution over the pieces of fruit, or by any other similar technique allowing the pieces of fruit to be coated.

In accordance with all this, there is obtained an edible coating, for the preservation of pieces of fruit, which is imperceptible to the eye and the taste of the user, and which, by using very high viscosity carboxymethyl cellulose at a very low concentration, allows a polysaccharide matrix which behaves adequately as a sacrificing agent against the loss of moisture suffered by the cut fruit to be obtained, allowing the texture and flavor of the freshly cut fruit to be preserved.

### Detailed Description of the Invention

The edible coating of the invention is formed by a polysaccharide-based aqueous solution which is applied as a coating to the pieces of fruit. The aqueous solution is obtained by diluting in cold water (4°C-8°C) carboxymethyl cellulose, calcium, an antioxidant agent and, additionally, an antimicrobial agent.

The calcium is obtained from calcium ascorbate, which acts by maintaining the texture of the pieces of fruit. The antioxidant agent is citric acid, or a combination of citric acid and sodium ascorbate, which allow the color of the pieces of fruit to be preserved and delay browning. The antimicrobial agent, which the aqueous solution may additionally include, is malic acid, which functions as an inhibitor of the growth of microorganisms, molds and yeasts, during the storage of the pieces of fruit.

Hereinafter there is given a table, in no case limitative, with the components which the edible coating of the invention may include, as well as the weight percentages at which it has been contemplated that those components may be found in the aqueous solution. The percentages are expressed in % w/w (weight of the component relative to the total weight of the respective aqueous solution). In one column, the weight percentage of each component, excluding the water of the aqueous solution, is given and in the other column the weight percentage of each component, including the water.

| | % w/w (excluding the water) | % w/w (including the water) |
|---|---|---|
| Carboxymethyl cellulose | 1%-4% | 0.1%-0.75% |
| Calcium ascorbate | 50% - 90% | 4% -12% |
| Citric acid | 1 % - 20% | 0.2% - 2% |
| Sodium ascorbate | 20% - 40% | 2% - 7% |
| Malic acid | 4% -15% | 0.5% - 2.5% |

The carboxymethyl cellulose used has a high viscosity, the viscosity being over 1500 mPa.s. The measured viscosity is of a 1% w/w aqueous CMC solution, using a Nahita 801 N/SC88808 viscometer, with a n° 2 spindle, at 12 rpm and 21 °C temperature.

The relationship between the high viscosity of the carboxymethyl cellulose and the low concentration used allows an edible coating for pieces of fruit, with appropriate physical and chemical properties to be obtained, which guarantees an adequate coating and preservation of the pieces of fruit, being imperceptible to the user, without the latter being able to appreciate it at sight, without contributing any texture at the time of eating and without contributing different flavors to the fruit.

Hereinafter, some non-limitative examples of edible coatings for pieces of fruit, according to the present invention, are illustrated.

### Example 1. Effect of the use of an edible coating on the quality of pieces of apple (Golden delicious) in comparison with the individual use of a polysaccharide or of a mixture of antioxidants.

Apples of the Golden delicious variety were used. They were washed on the surface and disinfected by immersion in a sodium hypochlorite (80 ppm) solution. After disinfection, the apples were cored and cut manually into 8 pieces (quarters), which were immediately coated.

In parallel, with a view to defining the combined effect of the different components forming part if the edible coating, the following solutions were prepared: individual solutions of CMC at 0.5% w/w, calcium ascorbate at 6% w/w, and a solution of citric acid at 1% w/w. The viscosity of the CMC solution was 146 mPa.s, measured with a Nahita 801 N/SC88808 viscometer, with a n° 2 spindle, at 30 rpm and 21 °C temperature. There was also prepared a solution containing the mixture of said components, CMC (0.5% w/w), calcium ascorbate (6% w/w) and citric acid (1% w/w), this mixture being considered to be the edible coating in question.

The individual solutions were prepared by dissolving 5.03 g of CMC, 63.83 g of calcium ascorbate or 10.09 g of citric acid per liter of water. In the case of the edible coating the solution was prepared by jointly dissolving 5.41 g of CMC, 64.86 g of calcium ascorbate and 10.81 g of citric acid in one liter of water. In any of the cases, the components were dissolved in water, by constant stirring, until completely dissolved, the temperature of both the water and of the solution being held at 6°C until their use as coating.

The pieces of apple were immersed for 1 minute in each of the solutions. In the case of the control sample, the pieces of apple were immersed in cold water for the same period of time. After this, the samples were drained for 1 minute in order to remove any excess coating that might remain on the surface of the fruit. Finally, the fruit was manually packaged in plastic tubs (PET), without the use of a modified atmosphere, and stored at 4°C for 15 days.

A sensory evaluation of the product was carried out to evaluate the individual effect of each of the components forming part of the coating, in comparison with the synergic effect that the mixture of said components had as an edible coating. The scale of evaluation was from 1 to 10, 10 being the highest mark awarded to the parameter evaluated, namely, a product with the same quality as the freshly cut fruit, and 1 being a very bad quality product (rejectable). The parameters evaluated during the 15 days storage were the color (10 being total absence of browning), texture (10 being a firm crisp texture) hydration (10 being complete hydration of the product surface), as well as the general appearance offered thereby during storage.

The application of an edible coating formed by a mixture of CMC, citric acid and calcium ascorbate effectively maintained the quality of the pieces of apple for the 15 days storage (Table 1).

The absence of brown coloring on the surface of the product, as well as, the maintenance of the surface hydration of the pieces of apple, were the two most relevant characteristics in the preservation of this fruit, which was obtained by a synergic effect of the different components forming the edible coating. Nevertheless, when said components were individually used, the results were very different. For example, when only CMC was used as coating agent, a greater protection of the pieces of apple against dehydration was observed, but, nevertheless, the first symptoms of browning appeared a few hours after being placed in storage.

In those pieces of apple where a calcium ascorbate solution was used as protective treatment of the fruit, there was observed a maintenance of the original color of the apple throughout almost all of the period of storage. Nevertheless, the surface hydration of the apples was very affected, the first symptoms of dehydration appearing from the first week of storage. The use of citric acid was not sufficient to maintain the visual quality of the pieces of apple, which showed symptoms of browning and dehydration a few days after being placed in storage.

In Table 1 there may also be seen a marked deterioration of the uncoated pieces of apple (control) from the first day of storage, with the presence of browning being the first symptom of loss of quality observed.

**Table 1 Effect of the use of a carboxymethyl cellulose based edible coating on the maintenance of the quality of minimally processed pieces of apple.**

| Components | *Days in storage* | *Color* | *Texture* | *Hydration* | *General appearance* |
|---|---|---|---|---|---|
| Edible coating (0.5% CMC + 6% Calcium ascorbate + 1% citric acid) | 1 | 10 | 10 | 10 | Very good |
| | 8 | 10 | 10 | 10 | Very good |
| | 15 | 10 | 10 | 9 | Good |
| CMC (0.5% p/p) | 1 | 7 | 10 | 10 | Onset of browning |
| | 8 | 6 | 9 | 8 | Browned, but still hydrated |
| | 15 | 2 | 8 | 7 | Quite browned. Onset of dehydration |
| Calcium ascorbate (6% p/p) | 1 | 10 | 10 | 10 | Good |
| | 8 | 9 | 8 | 5 | Dehydrated |
| | 15 | 8 | 7 | 4 | Very dehydrated, slightly soft and onset of browning |
| Citric acid (1% p/p) | 1 | 9 | 10 | 9 | First symptoms of browning |
| | 8 | 7 | 8 | 7 | Browned and onset of dehydration |
| | 15 | 4 | 7 | 5 | Very browned and dehydrated |
| Control | 1 | 8 | 9 | 9 | Onset of browning |
| | 8 | 3 | 8 | 4 | Very browned and dehydrated |
| | 15 | 1 | 7 | 2 | Very bad appearance, soft |

### Example 2. Effect of an edible coating as carrier for an antimicrobial agent on the shelf life of minimally processed pieces of kiwi.

Kiwis at an intermediate state of ripeness were used. They were initially washed and disinfected with the use of a hypochlorite solution (80 ppm). After this disinfection process, the kiwis were mechanically peeled, cut lengthwise into quarters and stored with refrigeration until the application of the edible coating.

The edible coating was formed by a mixture of CMC, calcium ascorbate, citric acid and malic acid in different proportions; (1) 0.4% w/w CMC, 4% w/w calcium ascorbate and 2% w/w citric acid; (2) 0.4% w/w CMC, 4% w/w calcium ascorbate and 2% w/w citric acid and 1% malic acid; (3) 0.4% w/w CMC, 4% w/w calcium ascorbate, 2% w/w citric acid and 3% malic acid. To prepare said solutions, the following components required for preparing each of the formulations included in Table 4 were dissolved in 1 liter of water: (1) 4.27 g CMC, 42.74 g of calcium ascorbate, 21.37 g of citric acid; (2) 4.32 g CMC, 43.20 g of calcium ascorbate, 21.60 g of citric acid 10.80 g of malic acid; (3) 4.42 g CMC, 44.15 g of calcium ascorbate, 22.08 g of citric acid, 33.11 g of malic acid, respectively. In any of the cases, cold water (6°C) was used to dissolve the mixture of components, with the use of a mechanical stirring system up to complete dissolution and hydration of the product. The mean viscosity of the solutions containing 0.4% w/w of CMC was 98mPa.s. The viscosity measurements were made with a Nahita 801 N/SC88808 viscometer, with a n° 2 spindle, at 30 rpm and 21 °C temperature.

Once the solutions forming the coating had been obtained, these were used as individual baths for coating the pieces of kiwi. The application of any of the solutions was effected by immersion of the product in the coating-forming solutions for 1 minute, the mean temperature of said solutions being 6°C. After this period of time, the kiwis were drained for 1 minute and subsequently manually packaged in plastic trays (PET), without the use of a modified atmosphere. All the samples were stored for 10 days at 4°C. In the case of the control samples, the pieces of kiwi were given a bath of cold water, for 1 minute, and subsequently packaged under the same conditions as the coated kiwi. After 10 days storage, a microbiological analysis was carried out to determine the effectiveness of the edible coating as a carrier for an antimicrobial agent against the growth of aerobic mesophilic bacteria, molds and yeasts.

In Table 2, there is to be seen the effect of the incorporation of an antimicrobial agent on the microbiological counts of minimally processed kiwi. The inclusion of 3% w/w of malic acid in an edible coating maintains the levels of aerobic mesophiles, molds and yeasts up to two decimal cycles below in comparison with the uncoated kiwi, allowing the shelf life of this product to be prolonged.

**Table 2. Microbiological shelf life of minimally processed pieces of kiwi treated with different formulations of edible coatings after 10 days in refrigerated storage.**

| Formulation | Molds and Yeasts (UFC/g) | Aerobic Mesophiles |
|---|---|---|
| 1. CMC + Calcium ascorbate + Citric acid | 1.04 x 10⁶ | 6.12 x 10⁴ |
| 2. CMC + Calcium ascorbate + Citric acid + Malic acid (1% p/p) | 2.85 x 10⁵ | 1.47 x 10⁴ |
| 3. CMC + Calcium ascorbate + Citric acid + Malic acid (3% p/p) | 7.80 x 10⁴ | 4.34 x 10³ |
| 4. Control | 6.95 x 10⁶ | 2.36 x 10⁵ |

### Example 3. Effect of the application of an edible coating on the shelf life of coated pieces of peach.

Peaches at an intermediate state of ripeness were used. They were washed and disinfected using a sodium hypochlorite solution (80 ppm). After this disinfection process, the peaches were cut lengthwise in quarters, the stone being removed therefrom.

In parallel, an edible coating was prepared, which was formed by a mixture of CMC (0.1% w/w), calcium ascorbate (5% w/w), citric acid (1.5% w/w) and sodium ascorbate (2.5% w/w), the mean viscosity of the solution being 10 mPa.s (values measured using a Nahita 801 N/SC88808 viscometer, with a n° 1 spindle, at 30 rpm and 21 °C temperature). The edible coating was prepared by dissolving 1.10g of CMC, 55.01g of calcium ascorbate, 16.50 g of citric acid and 27.50 g of sodium ascorbate in one liter of water. Said solution was prepared in cold water (6°C), with a stirring system, until complete dissolution and hydration, and was held at the same temperature until application.

The pieces of peach obtained were coated with the mixture of polysaccharide and antioxidants. To this end, the cut fruit was immersed in said solution for 1 minute, drained for the same period of time and subsequently packaged in plastic trays (PET), without the use of a modified atmosphere. Finally, the trays containing the fruit were stored with refrigeration (4°C for 12 days. The control samples were prepared and stored in the same way, the edible coating bath being replaced by a water bath at 6°C.

The quality characteristics of the coated pieces of peach were established throughout the entire period of storage by sensory evaluations. The changes in color, texture, flavor and odor were the main parameters evaluated. A scale of evaluation from 1 to 10 was established, with 10 being the best score awarded to the quality parameter evaluated, namely the same quality as the freshly cut product, 1 being a low quality product.

The main sensory characteristic preserved in the pieces of peach was their original color, which was retained with yellow tones and with no presence of dark coloring (browning), during the 12 days storage. Further to the color, the surface hydration of the product was also preserved throughout the entire period of storage, the dehydration observed in the control samples being prevented, as may be seen in Table 3.

**Table 3. Evolution of the shelf life of minimally processed peaches with the use of a CMC and antioxidant based edible coating.**

| Sample | Days in storage | Parameters evaluated | | | |
|---|---|---|---|---|---|
| | | Color | Texture | Surface hydration | Flavor / Odor |
| Coated peaches | 1 | 10 | 10 | 10 | 10 |
| | 6 | 10 | 10 | 10 | 10 |
| | 12 | 10 | 9 | 9 | 9 |
| Uncoated peaches (Control) | 1 | 8 | 9 | 9 | 10 |
| | 6 | 6 | 5 | 5 | 6 |
| | 12 | 2 | 2 | 1 | 3 |

### Example 4. Effect of the application of an edible coating on the quality of minimally processed pear.

Pears of the Conference variety were used. These were washed on the surface and disinfected by immersion in a hypochlorite solution (80 ppm). After disinfection, the pears were cored and manually cut into 8 pieces (quarters), which were immediately coated.

The edible coating was formed by a mixture of CMC (0.5 % w/w), calcium ascorbate (8% w/w), citric acid (0.3% w/w), sodium ascorbate (6% w/w) and malic acid (0.5% w/w). The coating was prepared by dissolving 5.90 g of CMC, 94.45 g of calcium ascorbate, 3.54 g of citric acid, 70.84 g of sodium ascorbate and 5.90 g of malic acid in 1 liter of cold water (6°C). The mean viscosity of the solution was 146 mPa.s, which was measured using a Nahita 801 N/SC88808 viscometer, with a n² 2 spindle, at 30 rpm and 21 °C temperature.

The fruit was coated by immersion of the pieces of pear in the edible coating solution, which had been held at 6°C, for 1 minute. After this period of time, the pieces of pear were drained (1 minute) and immediately packaged in plastic trays (PET), without the use of a modified atmosphere. Control samples were made in the same way, their only treatment being immersion in cold water following the same protocol as for the coated samples. All the trays of pears were stored at 4°C for 12 days.

During the storage period the pieces of pear were evaluated from the sensory point of view, in order to establish the effect of the use of an edible coating on the change of color undergone by this product once minimally processed. A sensory scale of 1 to 5 was applied to establish the degree of darkening of the samples, 5 representing a sample with a complete absence of browning (the off-white color of a freshly cut pear) and 1 the samples very browned on the surface (intense brown shades).

As may be seen in Table 4, the coated pear samples retained their original color for the 12 days in storage, a total absence of brown shades on the product surface being observed. In turn, in the samples to which no preservative treatment (control) had been applied, the presence of browning was observed from the first hours of storage. It is confirmed that the use of an edible coating as carrier for antioxidant agents maintains the quality of the cut fruit during storage, thereby prolonging the shelf life of the product.

**Table 4. Evolution of the degree of browning in minimally processed pieces of pear using an edible coating or not.**

| | Days in storage | | | |
|---|---|---|---|---|
| Sample | 1 | 4 | 8 | 12 |
| Coated pears | 5 | 5 | 5 | 5 |
| Uncoated (Control) | 2 | 1 | 1 | 1 |

## Claims

1. An edible coating for the preservation of pieces of fruit formed by a polysaccharide based aqueous solution which is applied over the pieces of fruit, **characterized in that** the aqueous solution comprises carboxymethyl cellulose (CMC) as polysaccharide base of the aqueous solution, calcium ascorbate, citric acid and an antimicrobial agent, where the carboxymethyl cellulose has a viscosity of over 1500 mPa.s as measured for a 1% w/w aqueous CMC solution, using a Nahita 801 N/SC88808 viscometer, with a n° 2 spindle at 12 rpm à 21°C, and is at a low concentration of between 0.025% and 1% by weight relative to the total weight of the components of the aqueous solution, the calcium ascorbate is at a concentration of between 3% and 15% by weight relative to the total weight of the components of the aqueous solution and the citric acid is at a concentration of between 0.5% and 30% by weight relative to the total weight of the components of the aqueous solution, excluding the water.

2. The edible coating for the preservation of pieces of fruit, according to claim 1, **characterized in that** the carboxymethyl cellulose is at a concentration of between 0.1% and 0.75% by weight relative to the total weight of the components of the aqueous solution.

3. The edible coating for the preservation of pieces of fruit, according to claim 2, **characterized in that** the calcium ascorbate is at a concentration of between 4% and 12% by weight relative to the total weight of the components of the aqueous solution.

4. The edible coating for the preservation of pieces of fruit, according to the claim 1, **characterized in that** it further comprises sodium ascorbate.

5. The edible coating for the preservation of pieces of fruit, according to claim 1, **characterized in that** the antimicrobial agent is malic acid.

6. The edible coating for the preservation of pieces of fruit, according to claim 5, **characterized in that** the malic acid is at a concentration of between 0.5% and 20% by weight relative to the total weight of the components of the aqueous solution, excluding the water.

7. The edible coating for the preservation of pieces of fruit, according to any one of claims 1 to 6, **characterized in that** the citric acid is at a concentration of between 1% and 20% by weight relative to the total weight of the components of the aqueous solution, excluding the water, and as the case may be, the malic acid is at a concentration of between 4% and 15% by weight relative to the total weight of the components of the aqueous solution, excluding the water.

8. A process for the manufacture of the edible coating for the preservation of pieces of fruit described in any one of claims 1 to 7, **characterized in that** said process consists of the following steps of:
- mixing in powder form all the components formed by carboxymethyl cellulose, calcium ascorbate, citric acid and the antimicrobial agent;
- diluting the powder mixture in cold water at a temperature of between 4°C and 8°C, with constant stirring, until it is completely dissolved and to obtain an aqueous solution.

9. A process of applying the edible coating for the preservation of pieces of fruit described in claims 1 to 7, **characterized in that** it comprises the following steps of:
- washing, peeling and cutting the fruit into pieces, all in the environment of a temperature of 4°C.
- applying to the pieces of fruit, at between 4°C and 8°C, the cold aqueous solution containing carboxymethyl cellulose, calcium ascorbate, citric acid and the antimicrobial agent, with the contact time between the aqueous solution and the pieces of fruit being between 40 seconds and 120 seconds.
- removing the excess coating of the aqueous solution.
- packaging the coated fruit.

10. The process of applying the edible coating for the preservation of pieces of fruit, according to claim 9, **characterized in that** the application of the aqueous solution is effected by spraying the aqueous solution over the pieces of fruit.

11. The process of applying the edible coating for the preservation of pieces of fruit, according to claim 9, **characterized in that** the application of the aqueous solution is effected by immersion of the pieces of fruit in the aqueous solution.

## Patentansprüche

1. Essbares Überzugsmittel zur Konservierung von Früchten, das durch eine polysaccharid-basierte wässrige Lösung gebildet wird, die über die Früchte appliziert wird, **dadurch gekennzeichnet, dass** die wässrige Lösung Carboxymethylcellulose (CMC) als Polysaccharidbasis der wässrigen Lösung, Calciumascorbat, Zitronensäure und ein antimikrobielles Mittel umfasst, wobei die Carboxymethylcellulose eine Viskosität von mehr als 1 500 mPa.s, wie für eine wässrige 1 % w/w CMC Lösung, unter Verwendung eines Nahita 801 N/SC88808 Viskosimeters mit einer Nr. 2 Spindel bei 12 U/min mit 21 °C gemessen umfasst, und in einer niedrigen Konzentration zwischen 0,025 Gew.-% und 1 Gew.-% in Bezug auf das Gesamtgewicht der Komponenten der wässrigen Lösung ist, das Calciumascorbat in einer Konzentration von zwischen 3 Gew.-% und 15 Gew.-% in Bezug auf das Gesamtgewicht der Komponenten der wässrigen Lösung ist, und die Zitronensäure in einer Konzentration zwischen 0,5 Gew.-% und 30 Gew.-% in Bezug auf das Gesamtgewicht der Komponenten der wässrigen Lösung exklusive Wasser ist.

2. Essbares Überzugsmittel zur Konservierung von Früchten nach Anspruch 1, **dadurch gekennzeichnet, dass** die Carboxymethylcellulose in einer Konzentration zwischen 0,1 Gew.-% und 0,75 Gew.-% in Bezug auf das Gesamtgewicht der Komponenten der wässrigen Lösung ist.

3. Essbares Überzugsmittel zur Konservierung von Früchten nach Anspruch 2, **dadurch gekennzeichnet, dass** die Carboxymethylcellulose in einer Konzentration zwischen 4 Gew.-% und 12 Gew.-% in Bezug auf das Gesamtgewicht der Komponenten der wässrigen Lösung ist.

4. Essbares Überzugsmittel zur Konservierung von Früchten nach Anspruch 1, **dadurch gekennzeichnet, dass** es weiter Natrium-Ascorbat umfasst.

5. Essbares Überzugsmittel zur Konservierung von Früchten nach Anspruch 1, **dadurch gekennzeichnet, dass** das antimikrobielle Mittel Apfelsäure ist.

6. Essbares Überzugsmittel zur Konservierung von Früchten nach Anspruch 5, **dadurch gekennzeichnet, dass** die Apfelsäure in einer Konzentration von 0,5 Gew.-% und 20 Gew.-% in Bezug auf das Gesamtgewicht der Komponenten der wässrigen Lösung, exklusive Wasser ist.

7. Essbares Überzugsmittel zur Konservierung von Früchten nach einem der Ansprüche 1 bis 6, **dadurch gekennzeichnet, dass** die Zitronensäure in einer Konzentration von zwischen 1 Gew.-% und 20 Gew.-% in Bezug auf das Gesamtgewicht der Komponenten der wässrigen Lösung, exklusive Wasser ist, und die Apfelsäure gegebenenfalls in einer Konzentration zwischen 4 Gew.-% und 15 Gew.-% in Bezug auf das Gesamtgewicht der Komponenten der wässrigen Lösung, exklusive Wasser ist.

8. Verfahren zum Herstellen des essbaren Überzugsmittels zur Konservierung von Früchten nach einem der Ansprüche 1 bis 7, **dadurch gekennzeichnet, dass** das Verfahren aus den folgenden Schritten besteht:
- Mischen in Pulverform aller Komponenten, die durch Carboxymethylcellulose, Calciumascorbat, Zitronensäure und das antimikrobielles Mittel gebildet werden;
- Verdünnen des Pulvergemisches in kaltem Wasser bei einer Temperatur von zwischen 4 °C und 8 °C unter ständigem Rühren, bis es vollständig gelöst ist, und um eine wässrige Lösung zu erhalten.

9. Verfahren zum Applizieren des essbaren Überzugsmittels zur Konservierung von Früchten nach einem der Ansprüche 1 bis 7, **dadurch gekennzeichnet, dass** es die folgenden Schritte umfasst:
- Waschen, Schälen und Schneiden der Früchte in Stücke, alles in einer Temperaturumgebung von 4 °C,
- Applizieren auf die Früchte, bei zwischen 4 °C und 8 °C der kalten wässrigen Lösung, die Carboxymethylcellulose, Calciumascorbat, Zitronensäure und das antimikrobielles Mittel enthält, wobei die Kontaktzeit zwischen der wässrigen Lösung und den Früchten zwischen 40 Sekunden und 120 Sekunden liegt,
- Entfernen des überschüssigen Überzugmittels der wässrigen Lösung,
- Verpacken der überzogenen Frucht.

10. Verfahren zum Applizieren des essbaren Überzugsmittels zur Konservierung von Früchten nach Anspruch 9, **dadurch gekennzeichnet, dass** das Applizieren der wässrigen Lösung durch Sprühen der wässrigen Lösung über die Früchte durchgeführt wird.

11. Verfahren zum Applizieren des essbaren Überzugsmittels zur Konservierung von Früchten nach Anspruch 9, **dadurch gekennzeichnet, dass** das Applizieren der wässrigen Lösung durch Eintauchen der Früchte in die wässrige Lösung durchgeführt wird.

## Revendications

1. Enrobage comestible pour la conservation de morceaux de fruits formé par une solution aqueuse à base de polysaccharide qui est appliquée sur les morceaux de fruits, **caractérisé en ce que** la solution aqueuse comprend de la carboxyméthylcellulose (CMC) comme base polysaccharidique de la solution aqueuse, de l'ascorbate de calcium, de l'acide citrique et un agent antimicrobien, où la carboxyméthylcellulose a une viscosité de plus de 1500 mPa.s mesurée pour une solution aqueuse de CMC à 1% p/p, en utilisant un viscosimètre Nahita 801 N/SC88808, avec une broche n°2 à 12 rpm à 21°C, et est à une faible concentration comprise entre 0,025% et 1% en poids par rapport au poids total des composants de la solution aqueuse, l'ascorbate de calcium est à une concentration comprise entre 3% et 15% en poids par rapport au poids total des composants de la solution aqueuse et l'acide citrique est à une concentration comprise entre 0,5% et 30% en poids par rapport au poids total des composants de la solution aqueuse, à l'exclusion de l'eau.

2. Enrobage comestible pour la conservation de morceaux de fruits, selon la revendication 1, **caractérisé en ce que** la carboxyméthylcellulose est à une concentration comprise entre 0,1% et 0,75% en poids par rapport au poids total des composants de la solution aqueuse.

3. Enrobage comestible pour la conservation de morceaux de fruits, selon la revendication 2, **caractérisé en ce que** l'ascorbate de calcium est à une concentration comprise entre 4% et 12% en poids par rapport au poids total des composants de la solution aqueuse.

4. Enrobage comestible pour la conservation de morceaux de fruits, selon la revendication 1, **caractérisé en ce qu'**il comprend en outre de l'ascorbate de sodium.

5. Enrobage comestible pour la conservation de morceaux de fruits, selon la revendication 1, **caractérisé en ce que** l'agent antimicrobien est l'acide malique.

6. Enrobage comestible pour la conservation de morceaux de fruits, selon la revendication 5, **caractérisé en ce que** l'acide malique est à une concentration comprise entre 0,5% et 20% en poids par rapport au poids total des composants de la solution aqueuse, à l'exclusion de l'eau.

7. Enrobage comestible pour la conservation de morceaux de fruits, selon l'une quelconque des revendications 1 à 6, **caractérisé en ce que** l'acide citrique est à une concentration comprise entre 1% et 20% en poids par rapport au poids total des composants de la solution aqueuse, à l'exclusion de l'eau, et le cas échéant, l'acide malique est à une concentration comprise entre 4% et 15% en poids par rapport au poids total des composants de la solution aqueuse, à l'exclusion de l'eau.

8. Procédé de fabrication de l'enrobage comestible pour la conservation de morceaux de fruits décrit dans l'une quelconque des revendications 1 à 7, **caractérisé en ce que** ledit procédé comprend les étapes suivantes consistant :
- à mélanger sous forme de poudre tous les composants formés par la carboxyméthylcellulose, l'ascorbate de calcium, l'acide citrique et l'agent antimicrobien ;
- à diluer le mélange de poudre dans de l'eau froide à une température comprise entre 4°C et 8°C, sous agitation constante, jusqu'à dissolution complète et obtenir une solution aqueuse.

9. Procédé d'application de l'enrobage comestible pour la conservation de morceaux de fruits décrit dans les revendications 1 à 7, **caractérisé en ce qu'**il comprend les étapes suivantes consistant :
- à laver, éplucher et couper les fruits en morceaux, le tout dans un environnement ayant une température de 4°C.
- à appliquer sur les morceaux de fruits, à une température comprise entre 4°C et 8°C, la solution aqueuse froide contenant de la carboxyméthylcellulose, de l'ascorbate de calcium, de l'acide citrique et l'agent antimicrobien, le temps de contact entre la solution aqueuse et les morceaux de fruit étant compris entre 40 secondes et 120 secondes.
- à enlever le revêtement en excès de la solution aqueuse.
- à emballer les fruits enrobés.

10. Procédé d'application de l'enrobage comestible pour la conservation de morceaux de fruits, selon la revendication 9, **caractérisé en ce que** l'application de la solution aqueuse est effectuée par pulvérisation de la solution aqueuse sur les morceaux de fruits.

11. Procédé d'application de l'enrobage comestible pour la conservation de morceaux de fruits, selon la revendication 9, **caractérisé en ce que** l'application de la solution aqueuse est effectuée par immersion des morceaux de fruits dans la solution aqueuse.
